Europäisches Patentamt

(19) ))) European Patent Office

Office européen des brevets

(11) Publication number: **0 089 750**

**B1**

(12) **EUROPEAN PATENT SPECIFICATION**

(45) Date of publication of patent specification: **10.12.86**

(51) Int. Cl.⁴: **F 16 D 65/02**

(21) Application number: **83300893.1**

(22) Date of filing: **21.02.83**

(54) **Friction pad assembly for disc brakes.**

(30) Priority: **11.03.82 GB 8207167**

(43) Date of publication of application:
**28.09.83 Bulletin 83/39**

(45) Publication of the grant of the patent:
**10.12.86 Bulletin 86/50**

(84) Designated Contracting States:
**BE DE FR IT**

(56) References cited:
**DE-A-2 538 352
DE-A-2 558 141
DE-B-1 750 769
DE-B-2 023 696
DE-B-2 558 294
GB-A-1 364 861
GB-A-1 531 198
GB-A-2 056 601
US-A-3 980 160**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Coates, Barry
25, Horton Drive Middleton Cheney
Nr. Banbury Oxon (GB)**
Inventor: **Bancroft, Roger Neil
Pipers Rise Ivy Lane Shutford
Nr. Banbury Oxon (GB)**

(74) Representative: **Adkins, Michael et al
Withers & Rogers 4 Dyer's Buildings
Holborn London, EC1N 2JT (GB)**

Courier Press, Leamington Spa, England.

## Description

This invention relates to friction pad assemblies for disc brakes of motor vehicles. The invention is particularly concerned with sliding pin brake calipers.

A sliding pin caliper for a disc brake comprises a frame member for attachment to the vehicle and a bridge member mounted on the frame member by slide pins to allow relative movement axially of the brake disc. The bridge member includes actuation means to apply a brake pad to one side of the brake disc and a bridge member straddling the disc to urge, by reaction, another brake pad against the other side of the disc.

The slide pins allow movement of the bridge to both equalize brake pad loads and to compensate for wear of the indirectly applied brake pad.

The brake pads of such a caliper are generally changed by removing one slide pin pivoting the bridge member about the frame member on the other slide pin to reveal the brake pads. The pads are then free to be withdrawn for inspection and/or replacement.

It is desirable to bias the pads into the caliper to prevent rattle and it has been proposed to mount a spring on each pad backplate, the individual springs being stressed by contact with the bridge member as the caliper is closed.

Several of the individual springs hitherto proposed have the disadvantage that should a spring break, the brake pad on which it is mounted is unrestrained and free to rattle.

In particular the spring of the inboard (directly applied) brake pad must rub across the underside of the bridge member as it is advanced by the actuation means to compensate for friction material wear. The bridge member usually has a rough cast finish and rubbing movement of the spring results in additional stressing which could lead to fracture, thus leaving that brake pad unrestrained. Moreover, the separate brake pads hitherto proposed are difficult to lift out of the caliper.

It has been proposed in US—A—3980160 to provide a pin extending between the brake pads and located in opposed apertures in lugs on the pads. A leaf spring is provided having a central portion abutting the pin and arms extending from the central portion. However, when the pad and pin assembly is installed in the caliper, the pin locates in apertures in the caliper and has to be withdrawn before the pads can subsequently be removed. This earlier proposal does not, therefore, overcome the difficulties of lifting separate brake pads from the caliper.

An object of the present invention is to provide a friction pad assembly and a spring for use therewith which mitigates the foregoing problems.

According to the invention, there is provided a friction pad assembly for a sliding pin caliper disc brake including a bridge member and frame member, the assembly comprising a pair of opposed brake pads each having a backing plate with an upstanding lug, a pin extending between the pads and located in respective opposed apertures in the lugs and a leaf spring having a central portion abutting the pins and arm extending from the central portion in opposite directions transverse to the pin, characterised in that said pin, when the assembly is installed in the caliper, is independent of the caliper with the arms of the leaf spring engaging the bridge member so as to urge the brake pads away from the bridge member against the frame member of the caliper to inhibit rattling. With such an arrangement the brake pads and pin assembly can easily be lifted from the caliper for inspection or replacement.

Preferably the spring has a substantially U-shaped central portion located over the pin. The said central portion may be shaped so as to clip onto the pin and be retained by its own resilience. The pin may have an enlarged head at one end for abutment with the outer face of the backing plate of the outboard pad, the spring being clipped to the pin adjacent the inner face of said backing plate. When installed in the caliper, the enlarged head preferably lies between said outer face of the backing plate and an adjacent surface of the caliper, said pin having its other end located clear of the caliper whereby the pin is retained in the apertures.

GB—A—2056601 describes a one piece spring which resiliently engages brake pads. The spring has a central section with arms extending therefrom but the central section does not clip on to a pin and, again, does not overcome the problem of lifting separate pads from the caliper. In one embodiment of the present invention the spring has a central portion for attachment to the pin and arms extending outwardly towards the brake pads. The arms may comprise portions which diverge with respect to each other in a direction away from the central portion so as to lie outboard of edges of the central portion which edges lies transverse to the longitudinal direction of the pin, said arm portions terminating at respective parallel free end portions.

The pin may have one end fast within an aperture in the lug of one of the brake pads.

If desired the spring may instead be located in a slot in the pin.

In another embodiment, the spring comprises two separate spaced apart central portions engageable with the pin, the outer ends of the arms of one central portion being connected by elongate members to the outer ends of the arms of the other central portion so that both central portions locate on the pin with the brake pads therebetween.

The invention also includes a leaf spring for a friction pad assembly for a sliding pin caliper disc brake, the leaf spring comprising a substantially U-shaped central portion engageable with a pin which extends between opposed brake pads and a pair of arms extending from each extremity of the U-shaped portion, characterised in that the arms comprise portions which diverge with respect to each other in a direction away from the central portion so as to lie outboard of edges of the central portion which edges lie transverse to the longitudinal direction of the pin, said arm portions terminating at respective parallel free end portions. The spring may comprise two separate spaced apart central portions engageable with the pin, the outer ends of the arms of one central portion being connected by elongate members to the outer ends of the arms of the other central portion so that, in use, both central portions locate on the pin at spaced apart positions thereon.

Friction pad assemblies in accordance with the invention will now be described by way of example with reference to the accompanying drawings, in which:

Figure 1 is a plan view of a friction pad assembly in accordance with the invention;

Figure 2 is a transverse section through the assembly of Figure 1 on the line II—II in Figure 1;

Figure 3 is a vertical section through the assembly of Figure 2 on the line III—III in Figure 2;

Figure 4 is a plan view of a sliding pin caliper incorporating a friction pad assembly in accordance with the invention;

Figure 5 is a transverse section through the caliper of Figure 4 on the line V—V in Figure 4;

Figure 6 is a rear view of the caliper of Figure 4 and cut away on the line VI—VI in Figure 4 to show the pad assembly installation;

Figure 7 is a plan view of another type of leaf spring for the pad assembly;

Figure 8 is a section through the spring of Figure 7 on line VIII—VIII in Figure 7;

Figure 9 is a vertical section through an assembly incorporating the spring of Figure 7;

Figure 10 is an elevation of a further type of spring for the pad assembly;

Figure 11 is a plan view of another friction assembly in accordance with the invention;

Figure 12 is a transverse section through the assembly of Figure 11 on the line XII—XII in Figure 11; and

Figure 13 is a perspective view of a spring for the pad assembly of Figures 11 and 12.

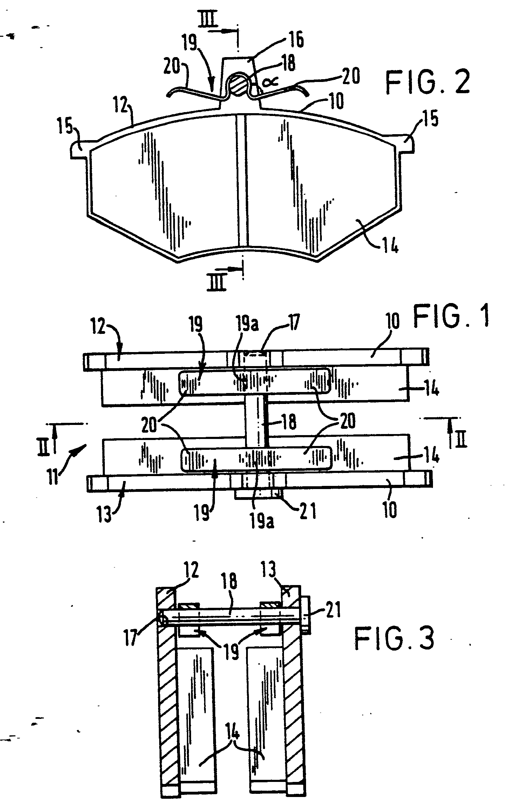

With reference to Figures 1—3 there is shown a friction pad assembly 11 comprising two brake pads 12, 13. Each pad comprises a backing plate 10 having a pad friction material 14 bonded thereto. Each backing plate has ears 15 for locating the respective pad in a brake caliper, and an upstanding lug 16 with an aperture therein.

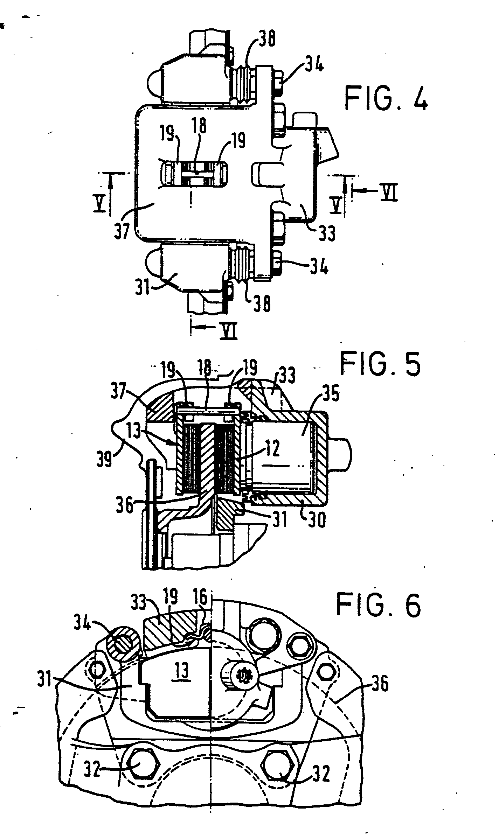

A cross pin 18 is a sliding fit through the apertures 17, leaf springs 19 being clipped to the pin adjacent each backing plate. Each spring has an inverted U-shaped central portion 19a and oppositely extending arms 20 for contact with a bridge member 33 (Figures 4—6) of a sliding pin brake caliper as will be further described. The arms 20 lie at an acute angle a to the limbs of the inverted U-shape and lie substantially at right angles to the pin 18. The cross pin 18 is retained in the intended outboard brake pad, for reasons explained hereafter, by an enlarged head 21 against which the backing plate 13 is held by the adjacent leaf spring 19.

Figures 4—6 show a sliding pin caliper suitable for receiving the pad assembly of Figure 1. The caliper comprises a frame member 31 attached by bolts 32 to a vehicle stub axle assembly. A bridge member 33 is mounted for transverse movement relative to the frame member 31 on two guide pins 34. The member 33 includes a hydraulic cylinder 30 having a piston 35, for directly urging the brake pad 12 against one side of a brake disc 36, and an end section 37 for urging the other brake pad 13 against the other side of the disc by reaction. The guide pins 34 have bellows seals 38 for protection.

The hydraulic cylinder 30 is mounted inboard of the brake disc 36, the inner profile of a road wheel 39 shrouds the end section 37 of the bridge member 33.

Figure 6 shows an installed brake pad assembly, the leaf spring 19 both retaining the pad assembly in its correct position and biasing the brake pad 13 against frame member 31 to prevent rattling.

In operation, the piston 35 advances to compensate for wear of the brake pad 12 whilst the bridge member 33 slides on the pins 34 to compensate for wear of pad 13. Thus the outboard spring is stationary with respect to the bridge member 33 whilst the inboard spring must slide over the underside of the bridge member as the backplate of pad 12 is advanced by the piston 35.

Should one of the leaf springs 19 fracture, the other will continue to bias both pads into the caliper by virtue of the cross pin 18. The pin 18 is retained in the caliper, when closed, by the end section 37, in one direction and the enlarged head 21 in the other.

The pad assembly 11 may be inspected and/or replaced by removing one of the slide pins 34 and hinging the bridge member about the remaining pin. The assembly may be withdrawn and replaced as a unit by lifting the pin 18 or by hooking an implement under the pin to ease the assembly out of the caliper.

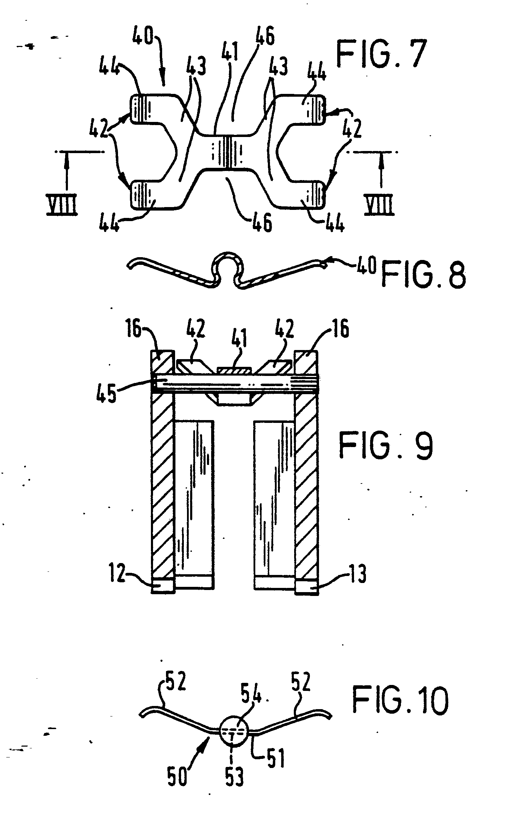

Another type of leaf spring 40 which is stationary with respect to the bridge member under all conditions of use is shown in Figures 7—9. The spring 40 has a central clip portion 41 and two pairs of arms 42 extending outwardly for contact with the caliper bridge member. Each pair of arms 42 comprises portions 43 which diverge from the central portion 41 and parallel end portions 44. The arms 42 are transverse to a pin 45 on which the central portion 44 is a snap fit. As shown in Figure 9 the pin 45 is retained in the outboard pad 13 by means of serrations at the mating end of the pin. Other means such as circlips or the like may be used to retain the pin. In this embodiment the end portions 44 remain stationary against the underside of the bridge member at all times. As the parts wear, they move inwardly towards the disc and the pin 18 complete with spring 40 moves to the left in Figure 9 relative to pad 12. The upstanding lugs 16 of the pads enter spaces 46 indicated in Figure 7 as wear increases.

A single wide leaf spring of the kind shown in Figure 1—3 may be provided centrally on the pin.

Figure 10 shows a further type of leaf spring 50 having a central portion 51 and oppositely extending arms 52. The central portion 51 is located in a diametral slot 53 formed in a pin 54 which locates in the brake pads (not shown). The spring 50 may have pairs of diverging arms similar to spring 40 in Figure 7 or may be of the type shown in Figure 1 in which case two springs may be located in the slot 53. The spring 50 may locate the pin 53 relative to the outboard brake pad 13.

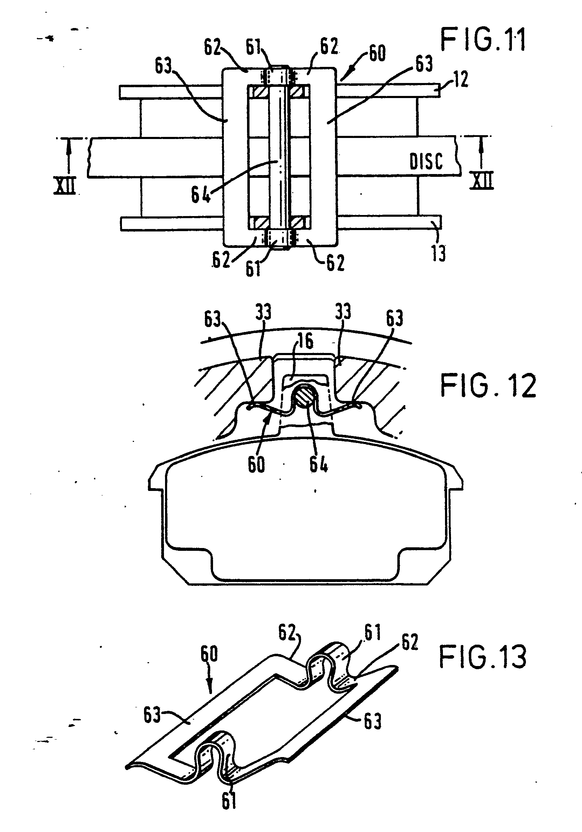

Yet another type of leaf spring 60 is shown in Figures 11—13. The spring comprises two spaced apart central portions 61 each having oppositely extending arms 62. The outer ends of the arms of one central portion are connected to the outer ends of the arms of the other central portion by parallel members 63 which, in use, engage the underside of the bridge member 33 as shown in Figure 12. The central portions snap fit in to a pin 64 which passes through the lugs 16 on brake pads 12, 13, the latter lying between the central portions as shown in Figure 11. As the pads wear, the pads will move inwardly towards the disc and away from one or both central portions. The pin 64 may be retained by suitable means in one of the lugs 16. As with the spring shown in Figures 7 to 9 the spring 60 remains stationary relative to the bridge member 33.

## Claims

1. A friction pad assembly for a sliding pin caliper disc brake including a bridge member (33) and a frame member (31), the assembly comprising a pair of opposed brake pads (12, 13) each having a backing plate (10) with an upstanding lug (16), a pin (18, 45, 54, 64) extending between the pads (12, 13) and located in respective opposed apertures in the lugs and a leaf spring (19, 40, 50, 60) having a central portion (19a, 41, 51, 61) abutting the pin (18, 45, 54, 64) and arms (20, 42, 52, 62) extending from the central portion in opposite directions transverse to the pin, characterised in that said pin (18, 45, 54, 64) when the assembly is installed in the caliper, is independent of the caliper with the arms (20, 42, 52, 62) of the leaf spring engaging the bridge member (33) so as to urge the brake pads (12, 13) away from the bridge member against the frame member (31) of the caliper inhibit rattling.

2. A friction pad assembly according to Claim 1, characterised in that the spring has a substantially U-shaped central portion (19a, 41, 51, 61) located the pin (18, 45, 54, 64).

3. A friction pad assembly according to Claim 2, characterised in that said central portion (19a, 41, 51, 61) is shaped so as to clip onto the pin (18, 45, 54, 64) and be retained by its own resilience.

4. A friction pad assembly according to Claim 3, characterised in that the pin (18) has an enlarged head (21) at end for abutment with the outer face of the backing plate (10) of the outboard pad (13), the spring (19) being clipped to the pin adjacent the inner face of said backing plate.

5. A friction pad assembly according to Claim 3 characterised in that the pin (18) has an enlarged head (21) at one end for abutment with the outer face of the backing plate (10) of the outboard pad (13), and with the assembly installed in the caliper, the enlarged head (21) lies between said outer face of said backing plate (10) and an adjacent surface of the caliper, said pin (18) having its other end located clear of the caliper whereby the pin is retained in the apertures (17) by the head head (21).

6. A friction pad assembly according to Claim 3, characterised in that the spring (40) has a central portion (41) for attachment to the pin and arms (42) extending outwardly towards the brake pads (12, 13).

7. A friction pad assembly according to Claim 6 characterised in that the arms comprise portions (43) which diverge with respect to each other in a direction away from the central portion so as to lie outboard of edges of the central portion (41) which edges lies transverse to the longitudinal direction of the pin (45), said arm portions (43) terminating at respective parallel free end portions.

8. A friction pad assembly according to Claim 3 characterised in that the pin (45) has one end fast within a said aperture in the lug of one of the brake pads (13).

9. A friction pad assembly according to Claim 1, characterised in that the spring (50) is located in a slot (53) in the pin (54).

10. A friction pad assembly according to Claim 2 characterised in that the spring (60) comprises two separate spaced apart central portions (61) engageable with the pin (64), the outer ends of the arms (62) of one central portion being connected by elongate members (63) to the outer ends of the arms (62) of the other central portion so that both central portions locate on the pin (64) with the brake pads therebetween.

11. A leaf spring for use with a friction pad assembly according to Claim 7 for a sliding pin caliper disc brake, comprising a substantially U-shaped central portion (41) engageable with a pin (45) which extends between opposed brake pads (12, 13) and a pair of arms (42) extending from each extremity of the U-shaped portion, characterised in that the arms comprise portions (43) which diverge with respect to each other in a direction away from the central portion so as to lie outboard of edges of the central portion (41) which edges lie transverse to the longitudinal direction of the pin (45), said arm portions (43) terminating at respective parallel free end portions.

12. A leaf spring for use with a friction pad assembly according to Claim 10, characterised in that the spring (60) comprises two separate spaced apart central portions (61) engageable with the pin (64), the outer ends of the arms (62) of one central portion being connected by elongate members (63) to the outer ends of the arms (62) of the other central portion (61) so that, in use, both central portions locate on the pin (64) at spaced apart positions thereon.

**Patentansprüche**

1. Reibungsklotzanordnung für eine Gleitstift-Sattelscheibenbremse, die ein Brückenteil (33) und ein Rahmenteil (31) enthält, wobei die Anordnung ein Paar von entgegengesetzten Bremsklötzen (12, 13) umfaßt, von denen jeder eine Rückenplatte (10) mit einer aufstehenden Öse (16) hat, einen Stift (18, 45, 54, 64), der sich zwischen den Klötzen (12, 13) erstreckt und in jeweiligen entgegengesetzten Öffnungen in den Ösen angeordnet ist, und eine Blattfeder (19, 40, 50, 60) aufweist, die einen Mittelabschnitt (19a, 41, 51, 61), der an dem Stift (18, 45, 54, 64) anliegt, und Arme (20, 42, 52, 62) hat, die sich von dem Mittelabschnitt aus in entgegengesetzten Richtungen erstrecken, dadurch gekennzeichnet, daß, wenn die Anordnung in den Sattel eingebaut ist, der Stift (18, 45, 54, 64) unabhängig von dem Sattel ist, wobei die Arme (20, 42, 52, 62) der Blattfeder an dem Brückenteil (33) angreifen, um die Bremsklötze (12, 13) von dem Bruckenteil weg gegen das Rahmenteil (31) des Sattels zu drängen, um Rattern zu unterdrücken.

2. Reibungsklotzanordnung nach Anspruch 1, dadurch gekennzeichnet, daß die Feder einen im wesentlichen U-förmigen Mittelabschnitt (19a, 41, 51, 61) hat, der über dem Stift (18, 45, 54, 64) angeordnet ist.

3. Reibungsklotzanordnung nach Anspruch 2, dadurch gekennzeichnet, daß der Mittelabschnitt (19a, 41, 51, 61) so geformt ist, daß er auf dem Stift (18, 45, 54, 64) einrastet und durch seine eigene Elastizität gehalten wird.

4. Reibungsklotzanordnung nach Anspruch 3, dadurch gekennzeichnet, daß der Stift (18) einen vergrößerten Kopf (21) an einem Ende zur Anlage an der äußeren Stirnfläche der Rückenplatte (10) des außenliegenden Klotzes (13) hat, wobei die Feder (19) auf dem Stift neben der inneren Stirnfläche der Rückenplatte eingerastet ist.

5. Reibungsklotzanordnung nach Anspruch 3, dadurch gekennzeichnet, daß der Stift (18) einen vergrößerten Kopf (21) an einem Ende zur Anlage an der äußeren Stirnfläche der Rückenplatte (10) des außenliegenden Klotzes (13) hat, und, wenn die Anordnung in dem Sattel eingebaut ist, der vergrößerte Kopf (21) zwischen der äußeren Stirnfläche der Rückenplatte (10) und einer angrenzenden Oberfläche des Sattels liegt, wobei das andere Ende des Stiftes (18) im Abstand von dem Sattel angeordnet ist, so daß der Stift in den Öffnungen (17) durch den Kopf (21) festgehalten ist.

6. Reibungsklotzanordnung nach Anspruch 3, dadurch gekennzeichnet, daß der Feder (40) einen Mittelabschnitt (41) zur Befestigung an dem Stift und Arme (42) hat, die sich nach außen auf die Bremsklötze (12, 13) zu erstrecken.

7. Reibungsklotzanordnung nach Anspruch 6, dadurch gekennzeichnet, daß die Arme Abschnitte (43) aufweisen, die bezüglich einander in einer Richtung weg von dem Mittelabschnitt divergieren, so daß sie außerhalb der Kanten des Mittelabschnittes (41) liegen, welche Kanten quer zu der Längsrichtung des Stiftes (45) liegen, wobei die Armabschnitte (43) an jeweiligen parallelen freien Endabschnitten enden.

8. Reibungsklotzanordnung nach Anspruch 3, dadurch gekennzeichnet, daß ein Ende des Stiftes (45) fest in einer Öffnung in der Öse von einem der Bremsklötze (13) ist.

9. Reibungsklotzanordnung nach Anspruch 1, dadurch gekennzeichnet, daß die Feder (50) in einem Schlitz (53) in dem Stift (54) angeordnet ist.

10. Reibungsklotzanordnung nach Anspruch 2, dadurch gekennzeichnet, daß die Feder (60) zwei getrennte voneinander beabstandete Mittelabschnitte (61) hat, die mit dem Stift (64) in Eingriff bringbar sind, wobei die äußeren Enden der Arme (62) des einen Mittelabschnittes durch längliche Teile (63) mit den äußeren Enden der Arme (62) des anderen Mittelabschnittes verbunden sind, so daß sich beiden Mittelabschnitte an dem Stift (64) befinden und die Bremsklötze dazwischen sind.

11. Blattfeder für eine Reibungsklotzanordnung nach Anspruch 7, für eine Gleitstift-Sattelscheibenbremse, mit einem im wesentlichen U-förmigen Mittelabschnitt (41), der mit einem Stift (45) in Eingriff bringbar ist, der sich zwischen entgegengesetzten Bremsklötzen (12, 13) erstreckt, und einem Paar Arme (42), die sich von jedem äußeren Ende des U-förmigen Abschnittes aus erstrecken, dadurch gekennzeichnet, daß die Arme Abschnitte (43) aufweisen, die bezüglich einander in einer Richtung weg von dem Mittelabschnitte divergieren, so daß sie außerhalb der Kanten des Mittelabschnittes (41) liegen, welche Kanten quer zu der Längsrichtung des Stiftes (45) liegen, wobei die Armabschnitte (43) an jeweiligen parallelen freien Endabschnitten enden.

12. Blattfeder für eine Reibungsklotzanordnung nach Anspruch 10, dadurch gekennzeichnet, daß die Feder (60) zwei getrennte voneinander beabstandete Mittelabschnitte (61) aufweist, die mit dem Stift (64) in Eingriff bringbar sind, wobei die äußeren Enden der Arme (62) des einen Mittelabschnittes durch längliche Teile (63) mit dem äußeren Enden der Arme (62) des anderen Mittelabschnittes (61) verbunden sind, so daß im Gebrauch beide Mittelabschnitte sich an dem Stift (64) an voneinander beabstandeten Stellen befinden.

**Revendications**

1. Ensemble de plaquettes de friction pour un frein à disque à étrier à broche de coulissement, comprenant un organe (33) formant pont et une monture (31), l'ensemble comprenant deux plaquettes de frein opposées (12, 13) ayant chacune une plaque de support (10) avec une languette verticale (16), une broche (18, 45, 54, 64) s'étendant entre les plaquettes (12, 13) et disposée dans des ouvertures respectives opposées dans les languettes et un ressort à lames (19, 40, 50, 60) ayant une partie centrale (19a, 41, 51, 61) en butée sur la broche (18, 45, 54, 64) et des branches (20, 42, 52, 62) s'étendant depuis la partie centrale dans des directions opposées transversalement à la broche, caractérisé en ce que lorsque l'ensemble est monté dans l'étrier, ladite broche (18, 45, 54, 64) est indépendante de l'étrier avec les branches (20, 42, 52, 62) du ressort à lames en contact avec l'organe (33) formant pont afin de forcer les plaquettes de frein (12, 13) en s'écartant de l'organe formant pont contre la monture (31) de l'étrier afin d'empêcher le cliquetis.

2. Ensemble de plaquettes de friction suivant la revendication 1, caractérisé en ce que le ressort présente une partie centrale de forme à peu près en U (19a, 41, 51, 61) disposée par-dessus la broche (18, 45, 54, 64).

3. Ensemble de plaquettes de friction suivant la revendication 2, caractérisé en ce que ladite partie centrale (19a, 41, 51, 61) est conformée de façon à se serrer sur la broche (18, 45, 54, 64) et à être retenue par sa propre élasticité.

4. Ensemble de plaquettes de friction suivant la revendication 3, caractérisé en ce que la broche (18) comporte une tête agrandie (21) à une extrémité pour être en butée avec la face externe de la plaque de support (10) de la garniture externe (13), le ressort (19) étant serré sur la broche au voisinage de la face interne de ladite plaque de support.

5. Ensemble de plaquette de friction suivant la revendication 3, caractérisé en ce que la broche (18) comporte une tête agrandie (21) à une extrémité destinée à venir en butée avec la face externe de la plaque de support (10) de la garniture externe (13), et avec l'ensemble monté sur l'étrier, la tête agrandie (21) reposant entre ladite surface de la plaque d'appui (10), et une surface adjacente de l'étrier, ladite broche (18) ayant son autre extrémité dégagée de l'étrier, grâce à quoi la broche est retenue dans les ouvertures (17) par la tête (21).

6. Ensemble de plaquettes de friction suivant la revendication 3, caractérisé en ce que le ressort (40) comporte une partie centrale (41) destinée à être fixée sur la broche et des branches (42) s'étendant vers l'extérieur en direction des plaquettes de frein (12, 13).

7. Ensemble de plaquettes de friction suivant la revendication 6, caractérisé en ce que les branches comprennent des parties (43) qui divergent l'une par rapport à l'autre dans une direction s'éloignant de la partie centrale de manière à se trouver à l'extérieur des bords de la partie centrale (41), ces bords étant disposés transversalement à la direction longitudinale de la broche (45), lesdites portions de branches (43) se terminant par des parties d'extrémité parallèles libres respectives.

8. Ensemble de plaquettes de friction suivant la revendication 3, caractérisé en ce que la broche (45) a une extrémité fixée dans ladite ouverture de la languette de l'une des plaquettes de frein (13).

9. Ensemble de plaquettes de friction suivant la revendication 1, caractérisé en ce que le ressort (50) est disposé dans une fente (53) dans la broche (54).

10. Ensemble de plaquettes de friction suivant la revendication 2, caractérisé en ce que le ressort (60) comprend deux parties centrales séparées espacées (61) pouvant venir en prise avec la broche (64), les extrémités externes de branches (62) d'une partie centrale étant reliées par des organes allongés (63) aux extrémités externes des branches (62) de l'autre partie centrale de manière que les deux parties centrales soient situées sur la broche (64) avec les plaquettes de frein entre-elles.

11. Ressort à lames destiné à être utilisé avec un ensemble de plaquettes de friction suivant la revendication 7 pour un étrier de frein à disque à broches de coulissement comportant une partie centrale de forme à peu près en U (41) pouvant coopérer avec une broche (45) qui s'étend entre des plaquettes de frein opposées (12, 13) et une paire de branches (42) s'étendant depuis chaque extrémité de la partie en forme de U, caractérisé en ce que les branches comprennent des parties (43) qui divergent l'une par rapport à l'autre dans une direction s'écartant de la partie centrale afin de se trouver à l'extérieur des bords de la partie centrale (41), ces bords étant situés transversalement à la direction longitudinale de la broche (45), lesdites parties de branches (43) se terminant sur des portions d'extrémité parallèles libres respectives.

12. Ressort à lames destiné à être utilisé avec un ensemble de plaquettes de friction suivant la revendication 10, caractérisé en ce que le ressort (60) comprend deux parties centrales séparées espacées (61) pouvant venir en prise avec la broche (64), les extrémités externes des branches (62) d'une partie centrale étant reliées par des organes allongés (63) aux extrémités externes des branches (62) de l'autre partie centrale (61) de manière qu'en service les deux parties centrales se situent sur la broche (64) en des positions espacées sur celle-ci.

**FIG. 2**

**FIG. 1**

**FIG. 3**

FIG. 4

FIG. 5

FIG. 6

FIG. 7

FIG. 8

FIG. 9

FIG. 10

FIG.11

FIG.12

FIG.13